# EUROPEAN PATENT SPECIFICATION

(11) **EP 4 390 193 B1**
(45) Date of publication and mention of the grant of the patent: **20.05.2026**
(21) Application number: 22938742.8
(22) Date of filing: 25.11.2022
(51) Int. Cl.: G05D 7/01, F16K 17/28

(54) **ULTRALOW-FLOW FLOW LIMITING DEVICE**
DURCHFLUSSBEGRENZUNGSVORRICHTUNG MIT EXTREM NIEDRIGEM DURCHFLUSS
DISPOSITIF LIMITEUR DE DÉBIT À DÉBIT ULTRA-FAIBLE

(30) Priority: 03.11.2022 CN 202211369142
(43) Date of publication of application: 26.06.2024
(73) Proprietor: Canature Health Technology Group Co., Ltd., Pudong District Shanghai 201299 (CN)
(72) Inventor: LIN, Hekun, Shanghai 201299 (CN)
(74) Representative: Bjerkén Hynell KB
(86) International application number: PCT/CN2022/134269
(87) International publication number: WO 2024/092909

(56) References cited:
- CN-A- 107 237 907
- CN-A- 110 410 547
- CN-A- 110 440 037
- CN-A- 114 941 732
- US-A- 5 340 080
- US-A1- 2017 052 544
- US-B1- 6 444 127

## Description

### TECHNICAL FIELD

This application relates to the field of water treatment, in particular to an ultra-low flow limiting device. Ultra-low flow refers to limited flow less than 0.4gpm.

### BACKGROUND

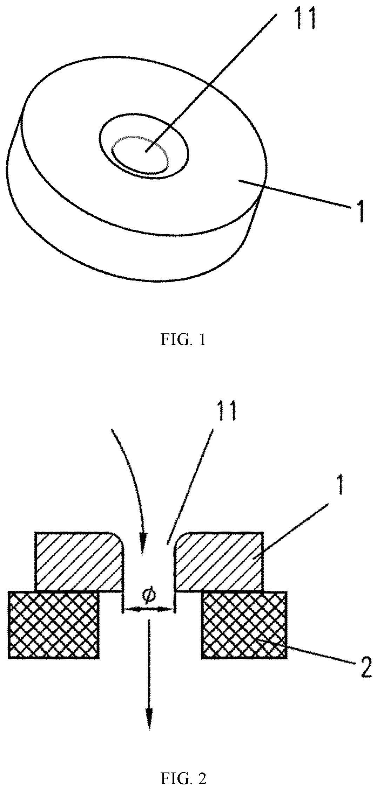

At present, the household soft water automatic control valves in the market are highly integrated, and are capable of automatically starting and completing regeneration processes such as salt absorption and slow flushing according to time or flow, and then automatically injecting water into a salt tank to dissolve salt for future use. In order to accurately control the amount of salt absorbed for regeneration, a water injection flow limiting device is mostly used to control the amount of water injected in combination with precise timing and thereby control the amount of salt used for regeneration at each time. Referring to FIG. 1 and FIG. 2, the water injection flow limiting plate is placed in a salt water pipeline and is an elastic circular plate with a middle hole. When the pressure of incoming water is high, the flow limiting plate is compressed and deformed, and the diameter of the middle hole becomes smaller. When the pressure is low, the deformation decreases, and the middle hole restores. This ensures that the water injection flow through the middle hole is basically stabilized at a certain value within a certain range of high and low pressures.

However, due to limitations in machining accuracy and principle, it is difficult to accurately machine and stably apply flow limiting plates with a middle hole less than about 1.5mm in practical use, that is, using the existing technologies and principles under the situation that the flow is less than about 0.4gpm is already difficult to meet the requirements. At present, for water injection control demands of many small water softeners and some control valves, there is an urgent need for an ultra-low flow limiting device for limiting flow less than 0.4gpm, i.e., ultra-low flow.

US patent US6776901B1 and US5340080 disclose flow control devices that limit flow by arranging a flow control gasket with a deformable orifice between an inlet and an outlet. However, due to unfavorable manufacturing tolerances when making small orifices, these structures cannot reliably and consistently achieve ultra-low flow limiting and cannot meet the control demands of ultra-low flow limiting.

### BRIEF SUMMARY

A series of simplified form concepts have been introduced in the content of this application, which are all simplifications of the existing technologies in the art. This will be further described in detail in the specific embodiments. The content of this application does not imply an attempt to define the key and necessary technical features of the claimed technical solution, nor does it imply an attempt to determine the scope of protection of the claimed technical solution.

The technical problem to be solved by this application is to provide an ultra-low flow limiting device with a simple structure, low manufacturing cost, and the ability to achieve ultra-low flow.

In order to solve the technical problem, the ultra-low flow limiting device provided in this application is especially applicable to water softeners and includes:
a flow limiting seat 4 formed as a rigid structure, an inner wall thereof forming a stepped structure, an incoming water area 41 being formed above a top surface of the stepped structure, an outgoing water area 43 being formed below the top surface of the stepped structure;
a flow limiting plate 5 formed as a deformable structure, forming a surface contact with the top surface of the stepped structure 44 and covering a first flow channel 42; and
the first flow channel 42 formed on the top surface of the stepped structure and communicable with the incoming water area 41 and the outgoing water area 43,
wherein the flow limiting plate 5 is deformable under pressure of a fluid and partially fills the first flow channel 42, and the fluid flows out of the outgoing water area 43 from the incoming water area 41 through the first flow channel 42.

Alternatively, as a further improvement of the ultra-low flow limiting device, the thickness range of the flow limiting plate 5 is 1-5mm and the Shore hardness range is 50-90.

Alternatively, as a further improvement of the ultra-low flow limiting device, the first flow channel 42 extends from a sidewall of the flow limiting seat 4 to an edge of the top surface 44 of the stepped structure.

Alternatively, as a further improvement of the ultra-low flow limiting device, the first flow channel 42 is formed as a crossing structure.

Alternatively, as a further improvement of the ultra-low flow limiting device, the ultra-low flow limiting device further includes:
a second flow channel 46 formed at a connection between the stepped structure and a sidewall of the flow limiting seat 4.

Alternatively, as a further improvement of the ultra-low flow limiting device, the ultra-low flow limiting device further includes:
a cover 3 in hard connection with the flow limiting seat 4 above the stepped structure.

Alternatively, as a further improvement of the ultra-low flow limiting device, the ultra-low flow limiting device further includes a third flow channel 45 formed around an inner sidewall of the flow limiting seat 4 above the flow limiting plate 5, and the fluid bypasses the flow limiting plate 5 through the third flow channel 45 to enter the second flow channel 46.

Alternatively, as a further improvement of the ultra-low flow limiting device, the cross section of the first flow channel 42 is an inverted triangular, square or arc-shaped groove.

Alternatively, as a further improvement of the ultra-low flow limiting device, in a case that the shape of the cross section of the first flow channel 42 is an inverted triangle, the height range of the triangle is 0.2-3mm.

This application can at least achieve the following technical effects:

This application improves the technical solution of limiting flow by changing the diameter of the middle hole in the existing technology, and utilizes water pressure to change the sealing degree of the sealing surface. The sealing surface uses a groove to form a gap with a certain length. The grooves in the flow limiting seat and the top surface of the stepped structure of this application are made of a hard material, which are easy to machine and shape, and can achieve size control of at least 0.1mm. At the same time, the flow limiting plate is made of a deformable material (such as elastic sealing pad). Through this structural design, when the pressure of incoming water is high, the flow limiting plate is deformed under the pressure and partially fills the groove to achieve ultra-low flow limiting. When the pressure is low, the flatness of the flow limiting plate restores, thus ensuring the function of obtaining stable flow within a certain pressure range.

In addition, this application can selectively design multiple grooves throughout the top surface of the stepped structure, so that the entire water flow area can be multiplied or reduced, and even multiple grooves may cross, thus further reducing the cross-sectional area and water flow stroke through the crossing point, so it is very suitable for use in low flow limiting.

The thickness and hardness of the flow limiting plate, as well as the width and depth of the grooves, can be easily adjusted through experimental results, and then the number of the grooves can be increased or reduced to obtain satisfactory limited flow.

This application has a simple, convenient, and flexible structure, is low in manufacturing cost, and is convenient to use, and meets the needs of specific market applications.

### BRIEF DESCRIPTION OF THE DRAWINGS

The drawings of this application are intended to illustrate the general characteristics of the methods, structures, and/or materials used in specific exemplary embodiments of this application, and supplement the description herein. However, the drawings of this application are schematic diagrams not drawn to scale, and may not accurately reflect the precise structure or performance characteristics of any given embodiment. The drawings of this application should not be interpreted as restricting or limiting the range of numerical values or attributes covered by exemplary embodiments according to this application. This application will be further described below in combination with the specific embodiments with reference to the drawings.
FIG. 1 illustrates an external schematic diagram of a flow limiting plate in the existing technology.
FIG. 2 illustrates a working schematic diagram of a flow limiting plate in the existing technology.
FIG. 3 illustrates a top view according to an embodiment of this application.
FIG. 4 illustrates an A-A cross-sectional view of FIG. 3.
FIG. 5 illustrates a side view according to an embodiment of this application.
FIG. 6 illustrates a B-B cross-sectional view of FIG. 5.
FIG. 7 illustrates an enlarged view of position C in FIG. 6.

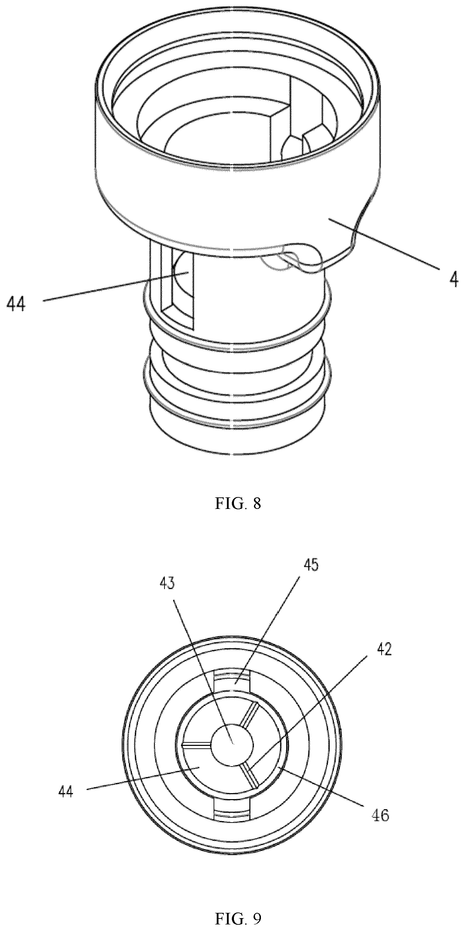

FIG. 8 illustrates an external schematic view of a flow limiting plate base according to an embodiment of this application.
FIG. 9 illustrates a top view of a flow limiting plate base according to an embodiment of this application.

### Description of reference signs

1-Existing flow limiting plate
11-water passing hole
2-existing flow limiting plate base
3-cover
4-flow limiting seat
41-incoming water area
42-first flow channel
43-outgoing water area
44-top surface of stepped structure
45-third flow channel
46-second flow channel
5-flow limiting plate
51-sealing plane of flow limiting plate in contact with top surface of stepped structure

### DETAILED DESCRIPTION OF THE APPLICATOIN

The implementations of this application will be described below through specific embodiments. Those skilled in the art can fully understand the other advantages and technical effects of this application from the content disclosed in the description. This application may also be implemented or applied through different specific implementations. The details in the description may also be applied based on different perspectives. Various modifications or changes may be made without departing from the overall design concept of this application. It should be noted that, without conflict, the following embodiments and the features in the embodiments may be combined with each other. The following exemplary embodiments of this application may be implemented in various forms. This application should not be understood as limited to the specific embodiments described here. It should be understood that these embodiments are provided to make the disclosure of this application thorough and complete, and to fully convey the technical solutions of these exemplary specific embodiments to those skilled in the art. It should be understood that when a component is referred to as "connected" or "coupled" to another component, the component may be directly connected or coupled to another component, or there may be an intermediate component. Differently, when a component is referred to as "directly connected" or "directly coupled" to another component, there is no intermediate component. In all drawings, the same reference sign always represents the same components. As used here, the term 'and/or' includes any combination and all combinations of one or more related listed items.

### Embodiment 1

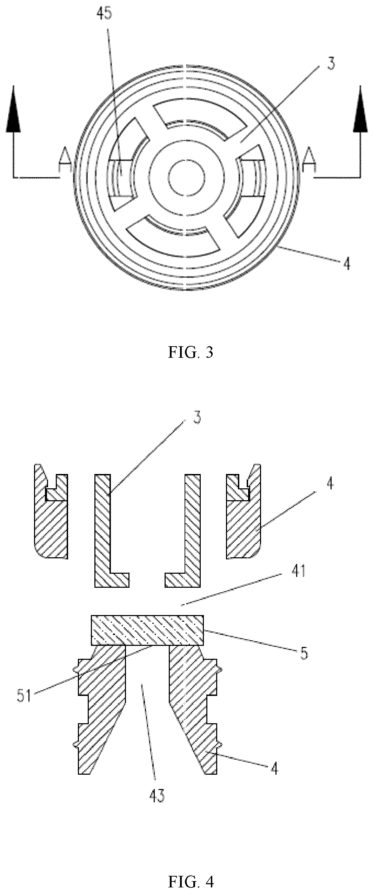

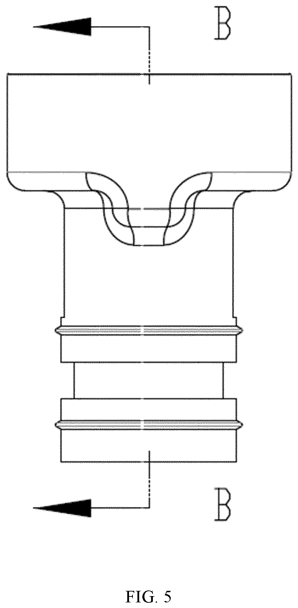

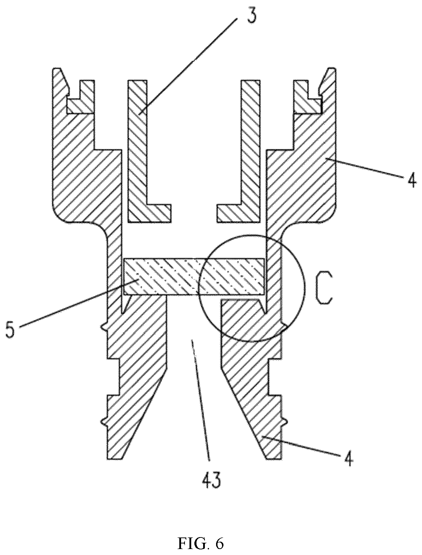

Referring to FIG. 3 to FIG. 6, this application provides an ultra-low flow limiting device, which includes:
a flow limiting seat 4 formed as a rigid structure, an inner wall thereof forming a stepped structure, an incoming water area 41 being formed above a top surface of the stepped structure, an outgoing water area 43 being formed below the top surface of the stepped structure;
a flow limiting plate 5 formed as a deformable structure, forming a surface contact with the top surface of the stepped structure 44 and covering a first flow channel 42; and
the first flow channel 42 formed on the top surface of the stepped structure, extending from a sidewall of the flow limiting seat 4 to an edge of a top surface 44 of the stepped structure, and communicable with the incoming water area 41 and the outgoing water area 43.

The flow limiting plate 5 is deformable under pressure of a fluid and partially fills the first flow channel 42, and the fluid flows out of the outgoing water area 43 from the incoming water area 41 through the first flow channel 42.

The flow limiting plate 5 is circular, the thickness range is 1-5mm, the Shore hardness range is 50-90, and the flow limiting seat 4 is formed as a rigid structure.

The cross section of the first flow channel 42 is an inverted triangular, square or arc-shaped groove.

In a case that the shape of the cross section of the first flow channel 42 is an inverted triangle, the height range of the triangle is 0.2-3mm.

Alternatively, as a further improvement of embodiment 1, in order to achieve lower flow limiting, the first flow channel 42 is formed as a crossing structure. It should be noted that the number of first flow channels 42 may be selected according to the actual situation. Correspondingly, whether two first flow channels 42 cross each other, whether three first flow channels 42 cross each other, or whether more first flow channels 42 cross each other may be selected according to actual flow limiting needs. Moreover, the same first flow channel 42 may pass through multiple crossing points, and multiple first flow channels 42 may also form a mesh flow channel through crossing.

In addition, it should be understood that although terms such as "first" and "second" may be used here to describe different components, parameters, components, areas, layers, and/or parts, these components, parameters, components, areas, layers, and/or parts should not be limited by these terms. These terms are only intended to distinguish one component, parameter, component, area, layer or part from another component, parameter, component, area, layer or part. Therefore, without departing from the teachings of exemplary embodiments of this application, the first element, parameter, component, area, layer or part discussed below may also be referred to as the second element, parameter, component, area, layer or part. For ease of description, spatial relative terms such as "below", "above", "underneath", "over" and "upper" may be used here to describe the spatial positional relationship between a component or feature and other components or features as illustrated in the drawings.

### Embodiment 2

The invention presents an enhanced ultra-low flow limiting device,, which is a further improvement on the basis if embodiment 1. It avoids unnecessary repetition of identical components and incorporates a cover 3 that is securely attached (e.g., through buckle fixation) to the limiting seat 4 positioned above the step structure.

Alternatively, an accommodating space is formed jointly by the cover 3 and the top surface of the stepped structure. The flow limiting plate 5 can move up and down within the accommodating space. This structure is particularly suitable for water softeners. When a control valve of the water softener sucks salt from a salt tank in an opposite direction by forming a negative pressure, the flow limiting plate needs to leave the water outlet and to not block the reverse free flow of salt water.

### Embodiment 3

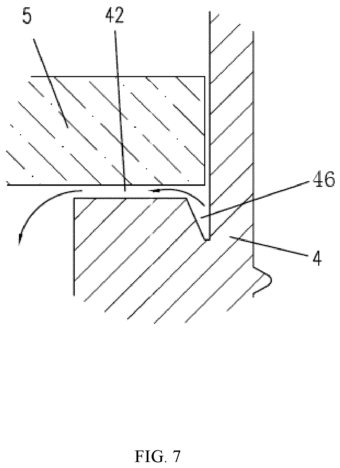

This application provides an ultra-low flow limiting device, which is a further improvement on the basis of embodiment 1 or embodiment 2. The same parts will not be repeated. The ultra-low flow limiting device further includes:
a second flow channel 46 formed at a connection between the stepped structure and a sidewall of the flow limiting seat 4, as illustrated in FIG. 7.

### Embodiment 4

This application provides an ultra-low flow limiting device, which is a further improvement on the basis of embodiment 3. The same parts will not be repeated. The ultra-low flow limiting device further includes:
a third flow channel 45 formed around an inner sidewall of the flow limiting seat 4 above the flow limiting plate 5. The fluid bypasses the flow limiting plate 5 through the third flow channel 45 to enter the second flow channel 46.

Unless otherwise defined, all terms used here, including technical and scientific terms, have the same meanings as those commonly understood by ordinary technical personnel in the field to which this application belongs. It is also to be understood that, unless explicitly defined here, terms such as those defined in a general dictionary should be interpreted as having meanings consistent with their meanings in the context of the relevant field, instead of being interpreted in ideal or overly formal meanings.

## Claims

1. An ultra-low flow limiting device, comprising:
a flow limiting seat (4) formed as a rigid structure, an inner wall thereof forming a stepped structure, an incoming water area (41) being formed above a top surface of the stepped structure, an outgoing water area (43) being formed below the top surface of the stepped structure;
a flow limiting plate (5) formed as a deformable structure, forming a surface contact with the top surface of the stepped structure (44) **characterized by** the flow limiting plate (5) covering a first flow channel (42); and
the first flow channel (42) formed on the top surface of the stepped structure and communicable with the incoming water area (41) and the outgoing water area (43),
wherein the flow limiting plate (5) is deformable under pressure of a fluid to partially fill the first flow channel (42), and the fluid flows out of the outgoing water area (43) from the incoming water area (41) through the first flow channel (42).

2. The ultra-low flow limiting device according to claim 1, wherein the thickness range of the flow limiting plate (5) is 1-5mm and the Shore hardness range is 50-90.

3. The ultra-low flow limiting device according to claim 1, wherein the first flow channel (42) extends from a sidewall of the flow limiting seat (4) to an edge of the top surface (44) of the stepped structure.

4. The ultra-low flow limiting device according to claim 1, wherein the first flow channel (42) is formed as a crossing structure.

5. The ultra-low flow limiting device according to claim 1, wherein the ultra-low flow limiting device further comprises:
a second flow channel (46) formed at a connection between the stepped structure and a sidewall of the flow limiting seat (4).

6. The ultra-low flow limiting device according to claim 1, wherein the ultra-low flow limiting device further comprises:
a cover (3) in hard connection with the flow limiting seat (4) above the stepped structure.

7. The ultra-low flow limiting device according to claim 5, wherein the ultra-low flow limiting device further comprises a third flow channel (45) formed around an inner sidewall of the flow limiting seat (4) above the flow limiting plate (5), and the fluid bypasses the flow limiting plate (5) through the third flow channel (45) to enter the second flow channel (46).

8. The ultra-low flow limiting device according to any one of claims 1-7, wherein the cross section of the first flow channel (42) is an inverted triangular, square or arc-shaped groove.

9. The ultra-low flow limiting device according to claim 8, wherein in a case that the shape of the cross section of the first flow channel (42) is an inverted triangle, the height range of the triangle is 0.2-3mm.

## Patentansprüche

1. Durchflussbegrenzungsvorrichtung mit extrem niedrigem Durchfluss, umfassend:
einen Durchflussbegrenzungssitz (4), der als eine starre Struktur gebildet ist, wobei eine innere Wand davon eine gestufte Struktur bildet, ein eingehender Wasserbereich (41) über einer oberen Oberfläche der gestuften Struktur gebildet ist, ein ausgehender Wasserbereich (43) unter der oberen Oberfläche der gestuften Struktur gebildet ist;
eine Durchflussbegrenzungsplatte (5), die als eine deformierbare Struktur gebildet ist, die einen Oberflächenkontakt mit der oberen Oberfläche der gestuften Struktur (44) bildet, **dadurch gekennzeichnet, dass** die Durchflussbegrenzungsplatte (5) einen ersten Durchflusskanal (42) abdeckt; und
den ersten Durchflusskanal (42), der auf der oberen Oberfläche der gestuften Struktur gebildet und kommunizierbar mit dem eingehenden Wasserbereich (41) und dem ausgehenden Wasserbereich (43) ist,
wobei die Durchflussbegrenzungsplatte (5) unter Druck eines Fluids deformierbar ist, um den ersten Durchflusskanal teilweise zu füllen, und das Fluid von dem eingehenden Wasserbereich (41) durch den ersten Durchflusskanal (42) hindurch aus dem ausgehenden Wasserbereich (43) herausfließt.

2. Durchflussbegrenzungsvorrichtung mit extrem niedrigem Durchfluss nach Anspruch 1, wobei der Dickenbereich der Durchflussbegrenzungsplatte (5) 1-5 mm beträgt und der Shore-Härtebereich 50-90 beträgt.

3. Durchflussbegrenzungsvorrichtung mit extrem niedrigem Durchfluss nach Anspruch 1, wobei sich der erste Durchflusskanal (42) von einer Seitenwand des Durchflussbegrenzungssitzes (4) zu einem Rand der oberen Oberfläche (44) der gestuften Struktur erstreckt.

4. Durchflussbegrenzungsvorrichtung mit extrem niedrigem Durchfluss nach Anspruch 1, wobei der erste Durchflusskanal (42) als eine Kreuzungsstruktur gebildet ist.

5. Durchflussbegrenzungsvorrichtung mit extrem niedrigem Durchfluss nach Anspruch 1, wobei die Durchflussbegrenzungsvorrichtung mit extrem niedrigem Durchfluss ferner Folgendes umfasst:
einen zweiten Durchflusskanal (46), der an einer Verbindung zwischen der gestuften Struktur und einer Seitenwand des Durchflussbegrenzungssitzes (4) gebildet ist.

6. Durchflussbegrenzungsvorrichtung mit extrem niedrigem Durchfluss nach Anspruch 1, wobei die Durchflussbegrenzungsvorrichtung mit extrem niedrigem Durchfluss ferner Folgendes umfasst:
eine Abdeckung (3) in harter Verbindung mit dem Durchflussbegrenzungssitz (4) über der gestuften Struktur.

7. Durchflussbegrenzungsvorrichtung mit extrem niedrigem Durchfluss nach Anspruch 5, wobei die Durchflussbegrenzungsvorrichtung mit extrem niedrigem Durchfluss ferner einen dritten Durchflusskanal (45) umfasst, der um eine innere Seitenwand des Durchflussbegrenzungssitzes (4) über der Durchflussbegrenzungsplatte (5) gebildet ist, und das Fluid die Durchflussbegrenzungsplatte (5) durch den dritten Durchflusskanal (45) hindurch umgeht, um in den zweiten Durchflusskanal (46) einzutreten.

8. Durchflussbegrenzungsvorrichtung mit extrem niedrigem Durchfluss nach einem der Ansprüche 1-7, wobei der Kreuzungsabschnitt des ersten Durchflusskanals (42) eine umgekehrt dreieckige, quadratische oder bogenförmige Nut ist.

9. Durchflussbegrenzungsvorrichtung mit extrem niedrigem Durchfluss nach Anspruch 8, wobei in einem Fall, in dem die Form des Kreuzungsabschnitts des ersten Durchflusskanals (42) ein umgekehrtes Dreieck ist, der Höhenbereich des Dreiecks 0,2-3 mm beträgt.

## Revendications

1. Dispositif de limitation de débit ultra-faible, comprenant :
un siège de limitation de débit (4) formé en tant que structure rigide, une paroi interne de celui-ci formant une structure étagée, une zone d'eau entrante (41) étant formée au-dessus d'une surface supérieure de la structure étagée, une zone d'eau sortante (43) étant formée en dessous de la surface supérieure de la structure étagée ;
une plaque de limitation de débit (5) formée en tant que structure déformable, formant un contact de surface avec la surface supérieure de la structure étagée (44) **caractérisé en ce que** la plaque de limitation de débit (5) recouvre un premier canal d'écoulement (42) ; et
le premier canal d'écoulement (42) formé sur la surface supérieure de la structure étagée et en communication avec la zone d'eau entrante (41) et la zone d'eau sortante (43),
dans lequel la plaque de limitation de débit (5) est déformable sous la pression d'un fluide pour remplir partiellement le premier canal d'écoulement (42), et le fluide s'écoule hors de la zone d'eau sortante (43) depuis la zone d'eau entrante (41) à travers le premier canal d'écoulement (42).

2. Dispositif de limitation de débit ultra-faible selon la revendication 1, dans lequel la plage d'épaisseur de la plaque de limitation de débit (5) est de 1 à 5 mm et la plage de dureté Shore est de 50 à 90.

3. Dispositif de limitation de débit ultra-faible selon la revendication 1, dans lequel le premier canal d'écoulement (42) s'étend depuis une paroi latérale du siège de limitation de débit (4) jusqu'à un bord de la surface supérieure (44) de la structure étagée.

4. Dispositif de limitation de débit ultra-faible selon la revendication 1, dans lequel le premier canal d'écoulement (42) est formé comme une structure croisée.

5. Dispositif de limitation de débit ultra-faible selon la revendication 1, dans lequel le dispositif de limitation de débit ultra-faible comprend en outre :
un deuxième canal d'écoulement (46) formé au niveau d'une connexion entre la structure étagée et une paroi latérale du siège de limitation de débit (4).

6. Dispositif de limitation de débit ultra-faible selon la revendication 1, dans lequel le dispositif de limitation de débit ultra-faible comprend en outre :
un couvercle (3) en liaison rigide avec le siège de limitation de débit (4) au-dessus de la structure étagée.

7. Dispositif de limitation de débit ultra-faible selon la revendication 5, dans lequel le dispositif de limitation de débit ultra-faible comprend en outre un troisième canal d'écoulement (45) formé autour d'une paroi latérale intérieure du siège de limitation de débit (4) au-dessus de la plaque de limitation de débit (5), et le fluide contourne la plaque de limitation de débit (5) à travers le troisième canal d'écoulement (45) pour entrer dans le deuxième canal d'écoulement (46).

8. Dispositif de limitation de débit ultra-faible selon l'une quelconque des revendications 1 à 7, dans lequel la section transversale du premier canal d'écoulement (42) est une rainure inversée triangulaire, carrée ou en forme d'arc.

9. Dispositif de limitation de débit ultra-faible selon la revendication 8, dans lequel, dans le cas où la forme de la section transversale du premier canal d'écoulement (42) est un triangle inversé, la plage de hauteur du triangle est de 0,2 à 3 mm.
